# FASCICULE DE BREVET EUROPEEN

(11) **EP 4 298 724 B1**
(45) Date de publication et mention de la délivrance du brevet: **26.03.2025**
(21) Numéro de dépôt: 22707519.9
(22) Date de dépôt: 23.02.2022
(51) Int. Cl.: H02S 20/23

(54) **DISPOSITIF DE SUPPORT A ÉTANCHÉITÉ PERFECTIONNÉE POUR PANNEAU SOLAIRE SUR TOITURE**
STÜTZVORRICHTUNG MIT VERBESSERTER DICHTUNG FÜR EIN DACHSOLARPANEEL
SUPPORT DEVICE WITH IMPROVED SEALING FOR A ROOF SOLAR PANEL

(30) Priorité: 25.02.2021 FR 2101827
(43) Date de publication de la demande: 03.01.2024
(73) Titulaire: Gys Holding, 93400 Saint-Ouen-sur-Seine (FR)
(72) Inventeur: DOUIEB, Yaniv, Tel Aviv (IL)
(74) Mandataire: Alatis
(86) Numéro de dépôt international: PCT/IB2022/051598
(87) Numéro de publication internationale: WO 2022/180545

(56) Documents cités:
- EP-A1- 3 480 942
- DE-A1- 102008 026 950
- US-A1- 2017 063 289
- US-B1- 7 861 485

## Description

La présente demande de brevet se rapporte à un dispositif de support sur toiture, qui est particulièrement adapté pour le support d'un panneau solaire du type panneau photovoltaïque ou panneau solaire thermique.

L'installation et la fixation d'un panneau solaire, que ce soit un panneau photovoltaïque ou un panneau solaire thermique, sont traditionnellement effectuées à l'aide d'un système de support à crochets et à rails métalliques.

Ce type de système à crochets selon l'art antérieur comporte généralement une pluralité de crochets qui présentent chacun une forme de U comprenant un tronçon inférieur, un tronçon supérieur et une portion intermédiaire de raccord.

Le tronçon inférieur s'étend suivant la direction de la pente du toit et il est fixé sur un élément de charpente, comme un chevron, par exemple par vissage.

De plus, le tronçon inférieur de chaque crochet est interposé entre une tuile de rang supérieur et une tuile de rang inférieur, pour dépasser de la couverture formée par les tuiles. On entend par tuile tout type d'élément de toiture adapté pour former une couverture de toit.

Le tronçon supérieur de chaque crochet s'étend au dessus de la couverture et il supporte une barre de fixation du panneau solaire, le système comportant au moins deux barres de fixation qui sont prévues pour fixer le panneau solaire sur le toit.

Les tuiles qui forment la couverture du toit se recouvrent en partie pour assurer l'étanchéité de la couverture.

On constate que sous le poids de la neige sur le panneau solaire ou sous le poids d'une personne, le tronçon inférieur de chaque crochet appuie sur la tuile qu'il recouvre.

Ainsi, le crochet risque d'endommager la tuile sur laquelle le crochet appui.

De plus, l'installation du crochet peut demander à découper une partie d'une tuile ou peut causer le soulèvement d'une tuile, ce qui peut nuire à l'étanchéité de la toiture et provoquer une infiltration d'eau sous la couverture.

Pour pallier ce problème, on connaît également de l'état de la technique un dispositif de support pour panneau solaire sur toiture qui est décrit et représenté dans le document FR3063192.

Selon ce document, le dispositif de support comporte un pied de support s'étendant selon un axe perpendiculaire à la toiture, un élément de toiture muni d'une cheminée pour le passage du pied de support, un organe de liaison du pied de support sur un panneau solaire et une cloche qui chapeaute le pied de support et la cheminée pour assurer l'étanchéité du dispositif et de la toiture.

Une faiblesse constatée avec les dispositifs de support pour panneau solaire du type décrit dans le document FR3063192 est l'étanchéité entre la cloche et le pied de support.

En effet, la cloche délimite un trou pour le passage du pied de support, ce trou étant orienté dans l'axe du pied de support, c'est à dire globalement verticalement, de sorte que de l'eau de pluie peut être amenée à ruisseler à travers le trou de passage.

Bien qu'un joint d'étanchéité peut être interposé entre la cloche et le pied de support pour assurer l'étanchéité du trou de passage ménagé dans la cloche, ce joint peut se détériorer dans le temps.

De plus, le remplacement d'un tel joint est complexe puisqu'il nécessite la dépose du panneau solaire monté sur le dispositif de support.

La présente invention a notamment pour but de résoudre ces inconvénients.

Le document US2017063289A1 décrit un dispositif de support pour panneau solaire sur toiture.

On atteint cet objectif, ainsi que d'autres apparaîtront à la lecture de la description qui suit, avec un dispositif de support pour panneau solaire sur toiture, qui comporte :
- un élément de toiture qui délimite un trou de passage, et
- un support pour panneau solaire qui passe à travers ledit trou de passage de l'élément de toiture,
caractérisé en ce que le support comporte au moins une première partie qui est adaptée pour être reliée sur une charpente et qui s'étend à travers le trou de passage délimité par l'élément de toiture, et au moins une seconde partie qui forme un coude avec ladite première partie et qui est adaptée pour supporter le panneau solaire, et en ce que le dispositif de support comporte une gaine coudée qui s'étend autour du support, depuis un premier tronçon relié sur le trou de passage délimité par l'élément de toiture, jusqu'à un second tronçon qui entoure la seconde partie du support, au moins en partie, pour empêcher l'entrée d'eau de pluie et assurer l'étanchéité de l'élément de toiture.

Le dispositif de support selon l'invention permet de garantir dans le temps l'étanchéité de la toiture sur laquelle il est posé.

De plus, le support du dispositif de support selon l'invention présente une forme de potence ou de crochet qui est courante dans le commerce et qui représente donc un coût modéré.

Suivant d'autres caractéristiques optionnelles du procédé selon invention, prises seules ou en combinaison :
- le second tronçon de la gaine est adapté pour être incliné vers l'aval de la toiture suivant le sens de ruissellement de l'eau de pluie, pour empêcher l'entrée d'eau de pluie dans la gaine ;
- le second tronçon de la gaine présente une extrémité libre qui est obturée par un bouchon pour empêcher l'intrusion de tout élément non désirable dans la gaine et assurer l'étanchéité de l'élément de toiture ;
- le bouchon forme une lumière qui présente une forme complémentaire à la forme de la section du support qui traverse le bouchon ;
- l'élément de toiture forme une collerette annulaire qui borde le trou de passage délimité par l'élément de toiture, et qui est reliée sur la gaine, pour empêcher l'eau de ruissellement de pénétrer à travers ledit trou de passage ;
- la gaine est déformable élastiquement pour s'adapter à la forme du support du panneau solaire ;
- l'élément de toiture est déformable élastiquement de façon à épouser globalement la forme d'un autre élément de toiture sous-jacent formant support ;
- le dispositif de support est équipé d'un dispositif d'ancrage qui comprend :
   - un élément d'ancrage qui est relié sur la première partie du support, et qui est agencé sous l'élément de toiture, et
   - une pluralité de branches qui s'étendent chacune depuis l'élément d'ancrage et qui relient chacune l'élément de toiture sur le support ;
- le support comporte une béquille qui s'étend depuis un pied prévu pour être en appui sur la charpente, jusqu'à une tête qui soutient la seconde partie du support ;
- la béquille est équipée d'une gaine d'étanchéité qui est reliée sur une collerette formée par l'élément de toiture.

D'autres caractéristiques et avantages de l'invention ressortiront à la lecture de la description qui suit, en référence aux figures annexées, qui illustrent :
[Fig. 1] : une vue en perspective du dispositif de support selon l'invention qui supporte un panneau solaire ;
[Fig. 2] : une vue en coupe du dispositif de support de la figure 1, monté sur une charpente, selon un mode de réalisation préféré de l'invention ;
[Fig. 3] : une vue en coupe similaire à celle de la figure 2, du dispositif de support selon une première variante de réalisation de l'invention dans laquelle l'élément de toiture selon l'invention est posé sur un élément de toiture sous-jacent ;
[Fig. 4] : une vue en coupe similaire à celle de la figure 2, du dispositif de support selon une seconde variante de réalisation de l'invention dans laquelle le dispositif de support selon l'invention est équipé d'un dispositif d'ancrage ;
[Fig. 5] : une vue en perspective de l'élément de toiture du dispositif de support de la figure 4, selon le second mode de réalisation de l'invention ;
[Fig. 6] : une vue en coupe similaire à celle de la figure 2, du dispositif de support selon une troisième variante de réalisation de l'invention dans laquelle le support comporte une béquille.

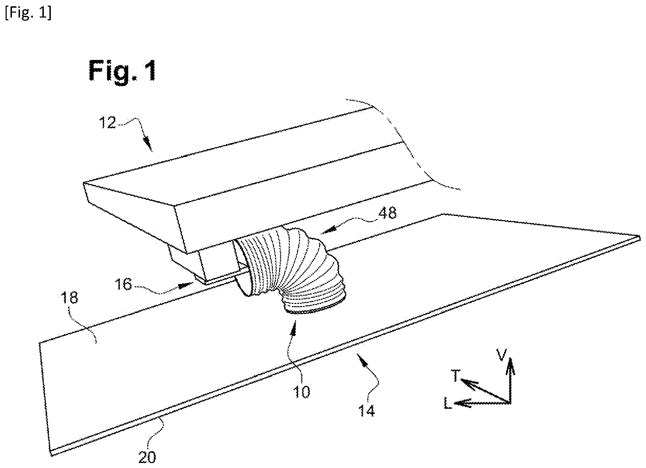

Dans la description et les revendications, on utilisera à titre non limitatif les expressions « supérieur », « inférieur » et leurs dérivés en référence à la partie supérieure et à la partie inférieure respectivement des figures 1 à 6, et les expressions « amont » et « aval » en référence au sens d'écoulement des eaux de pluie d'amont en aval sur la toiture.

De plus, pour clarifier la description et les revendications, on adoptera à titre non limitatif la terminologie longitudinal, vertical et transversal en référence au trièdre L, V, T indiqué aux figures.

Pour les différentes variantes de réalisation, les mêmes références pourront être utilisées pour des éléments identiques ou assurant la même fonction, par souci de simplification de la description.

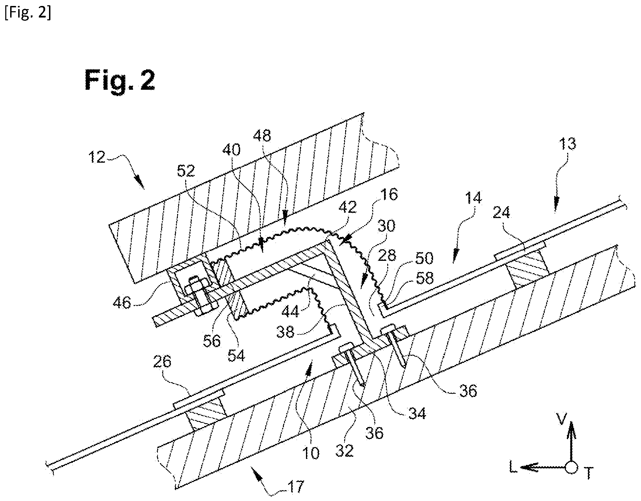

On a représenté à la figure 1 un dispositif de support 10 pour panneau solaire 12 qui est représenté dans une configuration d'utilisation, dans laquelle le dispositif 10 est incliné par rapport à un axe vertical, pour permettre l'écoulement des eaux de pluie d'amont en aval selon le sens de la pente de la toiture 13 (visible à la figure 2).

L'expression « panneau solaire » couvre tout type de panneau photovoltaïque et de panneau solaire thermique.

Le dispositif de support 10 comporte un élément de toiture 14 et un support 16 pour supporter et fixer le panneau solaire 12 sur la charpente 17 (visible à la figure 2).

Selon l'exemple décrit dans la présente description, l'élément de toiture 14 présente une forme globalement plane, comme une ardoise par exemple.

Toutefois, à titre non limitatif, l'élément de toiture 14 peut présenter la forme dune tuile ondulée ou tout autre forme adaptée.

L'élément de toiture 14 est délimité par une face supérieure 18 qui est orientée en regard du ciel et une face inférieure 20 qui est orientée vers la charpente 17.

Comme on peut le voir à la figure 2, l'élément de toiture 14 fait partie intégrante d'une couverture qui comprend une pluralité d'ardoises 22.

Plus particulièrement, l'élément de toiture 14 selon l'invention comporte une portion supérieure 24, ou amont, qui est recouverte par une ardoise de rang supérieur, et une portion inférieure 26, ou aval, qui recouvre une ardoise de rang inférieur.

Aussi, l'élément de toiture 14 délimite un trou de passage 28 pour le passage du support 16 du panneau solaire 12.

Le support 16 comporte une première partie 30 inférieure qui est reliée sur un chevron 32 de la charpente 17, et qui s'étend à travers le trou de passage 28 délimité par l'élément de toiture 14.

A cet effet, la première partie 30 inférieure du support 16 présente une forme en T inversé qui comporte une semelle 34 fixée sur le chevron 32 par quatre vis 36 (dont deux sont visibles à la figure 2), et un montant 38 qui s'étend perpendiculairement au plan général de la toiture 13.

De plus, le support 16 comporte une seconde partie 40 supérieure qui forme un coude 42 avec la première partie 30.

Plus particulièrement, la seconde partie 40 du support 16 s'étend en équerre depuis la première partie 30, globalement parallèlement au plan général de la toiture, de sorte que le support 16 présente la forme d'une potence.

On notera que les deux parties 30, 40 du support 16 sont reliées entre elles par un lien 44 de renfort.

Aussi, à titre non limitatif, la première partie 30 et la seconde partie 40 du support 16 peuvent être réalisées en deux parties qui sont montées réglables en hauteur l'une par rapport à l'autre.

Comme on peut le voir à la figure 2, la seconde partie 40 du support 16 porte le panneau solaire 12 par l'intermédiaire d'une barre 46 métallique transversale qui est fixée sur le support 16 par une vis, par exemple.

La barre 46 métallique est supportée par un autre dispositif de support (non représenté) selon l'invention. De même, on notera que le panneau solaire 12 est supporté par une seconde barre (non représentée) qui est reliée sur la charpente 17 par deux autres dispositifs de support selon l'invention (non représentés).

Selon un autre aspect de l'invention, le dispositif de support 10 comporte une gaine 48 coudée s'étendant autour du support 16, depuis un premier tronçon 50 qui est relié sur le trou de passage 28 délimité par l'élément de toiture 14 et qui entoure la première partie 30 du support 16, jusqu'à un second tronçon 52 qui entoure la seconde partie 40 du support 16.

Dans ce but, la gaine 48 est déformable élastiquement pour former un coude et pour s'adapter à la forme du support 16 de panneau solaire 12.

De plus, la gaine 48 forme un accordéon extensible pour s'adapter en longueur au support 16 associé.

Le second tronçon 52 de la gaine 48 est incliné vers l'aval de la toiture 13 suivant le sens de ruissellement de l'eau de pluie.

Autrement dit, l'extrémité libre de la gaine 48 est orientée sensiblement vers le sol, pour empêcher l'entrée d'eau de pluie dans la gaine 48 directement ou par ruissellement.

De plus, l'extrémité libre du second tronçon 52 de la gaine 48 est obturée par un bouchon 54 pour empêcher l'intrusion de tout élément non désirable dans la gaine 48 et assurer l'étanchéité de l'élément de toiture 14.

A cet effet, le bouchon 54 forme une lumière 56 qui présente une forme complémentaire à la forme de la section du support 16 qui traverse le bouchon 54.

Le bouchon 54 est par exemple réalisé en matériau déformable élastiquement comme une mousse à mémoire de forme ou une membrane élastomère ou tout autre matériau adapté.

A titre non limitatif, une alternative à l'utilisation du bouchon 54 est le pincement de l'extrémité libre du second tronçon 52 de la gaine 48 contre le support 16, par exemple au moyen d'un collier de serrage (non représenté) qui écrase la gaine 48 contre le support 16.

En complément, l'élément de toiture 14 forme une collerette 58 annulaire qui borde le trou de passage 28, et qui est reliée sur le premier tronçon 50 de la gaine 48, pour empêcher l'eau de ruissellement de pénétrer à travers la trou de passage 28.

Le premier tronçon 50 de la gaine 48 est fixé sur la collerette 58 par ajustement en force ou par un collier de serrage (non représenté) par exemple.

A titre non limitatif, la gaine 48 peut être réalisée venue de matière avec l'élément de toiture 14.

Selon un mode de réalisation préféré de l'invention illustré à la figure 2, l'élément de toiture 14 selon l'invention est agencé à la place d'un autre élément de toiture qui est préalablement retiré de la toiture.

A cet effet, l'élément de toiture 14 selon l'invention présente des caractéristiques mécaniques au moins équivalentes à l'élément de toiture remplacé.

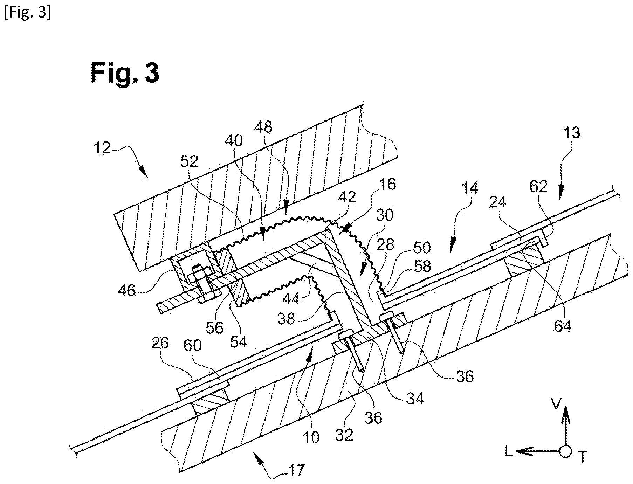

Selon une première variante de réalisation représentée à la figure 3, l'élément de toiture 14 selon l'invention est agencé sur un élément de toiture 60 sous-jacent préexista nt.

Selon cette première variante de réalisation, l'élément de toiture 14 selon l'invention présente une forme complémentaire à la forme de l'élément de toiture 60 sous-jacent.

L'élément de toiture 14 selon l'invention peut aussi être déformable élastiquement de façon à épouser globalement la forme de l'élément de toiture 60 sous-jacent.

Toujours selon cette première variante de réalisation, il convient de percer l'élément de toiture 60 sous-jacent pour permettre le passage du support 16.

De plus, en référence à la figure 3, l'élément de toiture 14 selon l'invention comporte un bord supérieur 62, ou amont, en équerre qui coopère avec le bord supérieur 64 de l'élément de toiture 60 sous-jacent pour retenir en position l'élément de toiture 14 selon l'invention.

De même, pour assurer le maintient de l'élément de toiture 14 selon l'invention sur l'élément de toiture 60 sous-jacent, l'élément de toiture 14 selon l'invention peut être équipé par des bords (non représentés) qui sont prévus pour être rabattus à la périphérie de l'élément de toiture 60 sous-jacent.

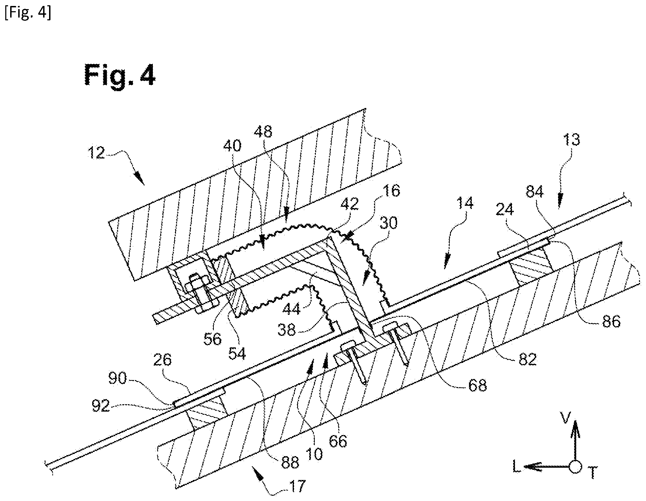

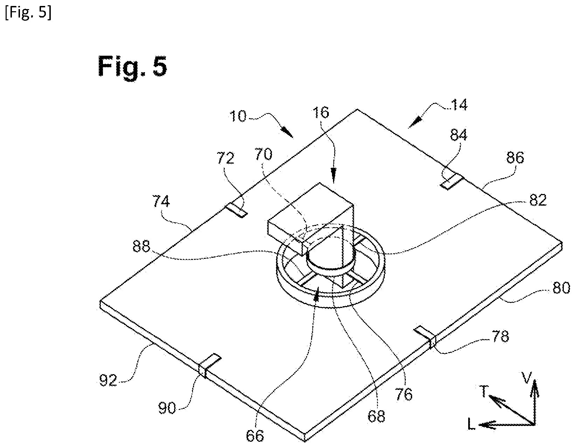

Selon une seconde variante de réalisation de l'invention représentée aux figures 4 et 5, le dispositif de support 10 est équipé d'un dispositif d'ancrage 66 qui comprend un élément d'ancrage 68, en forme d'anneau, agencé autour de la première partie 30 du support 16, sous l'élément de toiture 14.

Aussi, le dispositif d'ancrage 66 comporte une première branche 70 qui s'étend radialement depuis l'élément d'ancrage 68, jusqu'à une extrémité libre qui forme crochet 72 et qui coopère avec un premier bord latéral 74 de l'élément de toiture 14, une seconde branche 76 qui s'étend radialement depuis l'élément d'ancrage 68, jusqu'à une extrémité libre qui forme crochet 78 et qui coopère avec un second bord latéral 80 de l'élément de toiture 14, une troisième branche 82 qui s'étend radialement depuis l'élément d'ancrage 68, jusqu'à une extrémité libre qui forme crochet 84 et qui coopère avec un bord supérieur 86 de l'élément de toiture 14, et une quatrième branche 88 qui s'étend radialement depuis l'élément d'ancrage 68, jusqu'à une extrémité libre qui forme crochet 90 et qui coopère avec un bord inférieur 92 de l'élément de toiture 14.

Ainsi, le dispositif d'ancrage 66 permet de relier l'élément de toiture 14 sur le support 16, pour empêcher notamment le soulèvement de l'élément de toiture 14 en cas de vent violent.

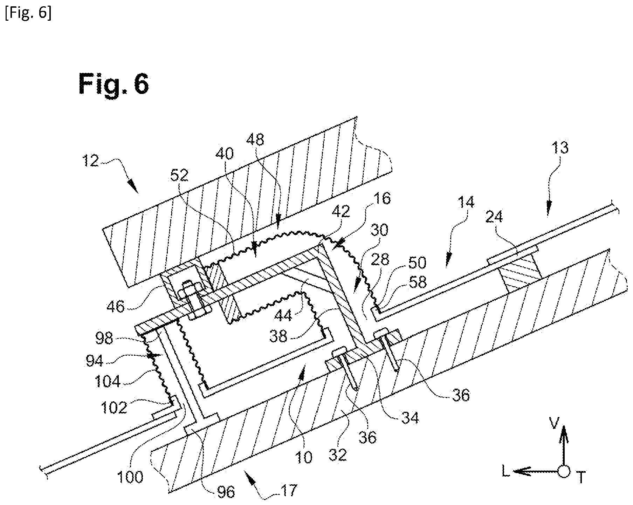

Enfin, selon une troisième variante de réalisation de l'invention illustrée à la figure 6, le support 16 comporte une béquille 94 s'étendant depuis un pied 96 qui est en appui sur le chevron 32 de la charpente, jusqu'à une tête 98 qui soutient la seconde partie 40 du support 16, au voisinage de son extrémité libre.

Aussi, la béquille 94 passe à travers une lumière 100 qui est ménagée dans l'élément de toiture 14 et qui est bordée par une collerette 102.

Pour assurer l'étanchéité de l'élément de couverture 14, la béquille 94 est équipée d'une gaine 104 qui s'étend depuis une première extrémité reliée sur la collerette 102, jusqu'à une seconde extrémité qui s'étend jusqu'à la seconde partie 40 du support 16.

Avantageusement, l'extrémité libre de la gaine 104 est fermée par un opercule qui est interposé entre l'extrémité de la béquille 94 et la seconde partie 40 du support 16.

La béquille 94 est adaptée pour améliorer la résistance mécanique du support 16, notamment pour supporter la charge du panneau solaire 12 et d'une éventuelle couche de neige.

A titre non limitatif, le dispositif de support 10 selon l'invention peut comporter une unique gaine (non représentée) qui s'étend depuis la collerette 58 amont, jusqu'à la collerette 102 aval, en recouvrant simultanément le support 16 et la béquille 94. La barre 46 qui supporte le panneau solaire 12 est alors en appui sur la gaine et fixée sur le support 16 par sanglage par exemple.

La présente description de l'invention est donnée à titre d'exemple non limitatif.

On comprendra notamment que le dispositif de support 10 selon l'invention permet également le passage d'un câble, ou tuyau, à travers la gaine 48.

## Revendications

1. Dispositif de support (10) pour panneau solaire (12) sur toiture, qui comporte :
- un élément de toiture (14) qui délimite un trou de passage (28), et
- un support (16) pour panneau solaire (12) qui passe à travers ledit trou de passage (28) de l'élément de toiture (14),
dans lequel le support (16) comporte au moins une première partie (30) qui est adaptée pour être reliée sur une charpente (17) et qui s'étend à travers le trou de passage (28) délimité par l'élément de toiture (14), et au moins une seconde partie (40) qui forme un coude (42) avec ladite première partie (30) et qui est adaptée pour supporter le panneau solaire (12),
**caractérisé en ce que** le dispositif de support (10) comporte une gaine (48) coudée qui s'étend autour du support (16), depuis un premier tronçon (50) relié sur le trou de passage (28) délimité par l'élément de toiture (14), jusqu'à un second tronçon (52) qui entoure la seconde partie (40) du support (16), au moins en partie, pour empêcher l'entrée d'eau de pluie et assurer l'étanchéité de l'élément de toiture (14).

2. Dispositif de support (10) pour panneau solaire (12) selon la revendication 1, **caractérisé en ce que** le second tronçon (52) de la gaine (48) est adapté pour être incliné vers l'aval de la toiture (13) suivant le sens de ruissellement de l'eau de pluie, pour empêcher l'entrée d'eau de pluie dans la gaine (48).

3. Dispositif de support (10) pour panneau solaire (12) selon l'une quelconque des revendications précédentes, **caractérisé en ce que** le second tronçon (52) de la gaine (48) présente une extrémité libre qui est obturée par un bouchon (54) pour empêcher l'intrusion de tout élément non désirable dans la gaine (48) et assurer l'étanchéité de l'élément de toiture (14).

4. Dispositif de support (10) pour panneau solaire (12) selon la revendication 3, **caractérisé en ce que** le bouchon (54) forme une lumière (56) qui présente une forme complémentaire à la forme de la section du support (16) qui traverse le bouchon (54).

5. Dispositif de support (10) pour panneau solaire (12) selon l'une quelconque des revendications précédentes, **caractérisé en ce que** l'élément de toiture (14) forme une collerette (58) annulaire qui borde le trou de passage (28) délimité par l'élément de toiture (14), et qui est reliée sur la gaine (48), pour empêcher l'eau de ruissellement de pénétrer à travers ledit trou de passage (28).

6. Dispositif de support (10) pour panneau solaire (12) selon l'une quelconque des revendications précédentes, **caractérisé en ce que** la gaine (48) est déformable élastiquement pour s'adapter à la forme du support (16) du panneau solaire (12).

7. Dispositif de support (10) pour panneau solaire (12) selon l'une quelconque des revendications précédentes, **caractérisé en ce que** l'élément de toiture (14) est déformable élastiquement de façon à épouser globalement la forme d'un autre élément de toiture sous-jacent formant support.

8. Dispositif de support (10) pour panneau solaire (12) selon l'une quelconque des revendications précédentes, **caractérisé en ce qu'**il est équipé d'un dispositif d'ancrage (66) qui comprend :
- un élément d'ancrage (68) qui est relié sur la première partie (30) du support (16), et qui est agencé sous l'élément de toiture (14), et
- une pluralité de branches (70, 76, 82, 88) qui s'étendent chacune depuis l'élément d'ancrage (68) et qui relient chacune l'élément de toiture (14) sur le support (16).

9. Dispositif de support (10) pour panneau solaire (12) selon l'une quelconque des revendications précédentes, **caractérisé en ce que** le support (16) comporte une béquille (94) qui s'étend depuis un pied (96) prévu pour être en appui sur la charpente (17), jusqu'à une tête (98) qui soutient la seconde partie (40) du support (16).

10. Dispositif de support (10) pour panneau solaire (12) selon la revendication 9, **caractérisé en ce que** la béquille (94) est équipée d'une gaine (104) d'étanchéité qui est reliée sur une collerette (102) formée par l'élément de toiture (14).

## Patentansprüche

1. Trägervorrichtung (10) für ein Solarmodul (12) auf dem Dach, die Folgendes umfasst:
- ein Dachelement (14), das ein Durchgangsloch (28) begrenzt, und
- einen Träger (16) für ein Solarmodul (12), der durch das Durchgangsloch (28) des Dachelements (14) verläuft,
wobei der Träger (16) mindestens einen ersten Teil (30) umfasst, der dazu ausgelegt ist, mit einem Gebälk (17) verbunden zu werden, und der sich durch das vom Dachelement (14) begrenzte Durchgangsloch (28) erstreckt, und mindestens einen zweiten Teil (40), der einen Winkel (42) mit dem ersten Teil (30) bildet und der dazu ausgelegt ist, das Solarmodul (12) zu tragen,
**dadurch gekennzeichnet, dass** die Trägervorrichtung (10) eine um den Träger (16) gebogene Hülle (48) umfasst, die sich von einem ersten Abschnitt (50) erstreckt, der mit dem durch das Dachelement (14) begrenzten Durchgangsloch (28) verbunden ist, bis zu einem zweiten Abschnitt (52), der den zweiten Teil (40) des Trägers (16) mindestens teilweise umgibt, um das Eindringen von Regenwasser zu verhindern und die Abdichtung des Dachelements (14) sicherzustellen.

2. Trägervorrichtung (10) für ein Solarmodul (12) nach Anspruch 1, **dadurch gekennzeichnet, dass** der zweite Abschnitt (52) der Hülle (48) dazu ausgelegt ist, in Richtung der Abwärtsrichtung des Daches (13) entlang der Abflussrichtung des Regenwassers geneigt zu sein, um das Eindringen von Regenwasser in die Hülle (48) zu verhindern.

3. Trägervorrichtung (10) für ein Solarmodul (12) nach einem der vorhergehenden Ansprüche, **dadurch gekennzeichnet, dass** der zweite Abschnitt (52) der Hülle (48) ein freies Ende aufweist, das durch einen Stopfen (54) verschlossen ist, um das Eindringen unerwünschter Elemente in die Hülle (48) zu verhindern und die Abdichtung des Dachelements (14) sicherzustellen.

4. Trägervorrichtung (10) für ein Solarmodul (12) nach Anspruch 3, **dadurch gekennzeichnet, dass** der Stopfen (54) ein Lumen (56) bildet, das eine Form aufweist, die komplementär zu der Form des durch den Stopfen (54) verlaufenden Abschnitts des Trägers (16) ist.

5. Trägervorrichtung (10) für ein Solarmodul (12) nach einem der vorhergehenden Ansprüche, **dadurch gekennzeichnet, dass** das Dachelement (14) einen ringförmigen Bund (58) bildet, der das vom Dachelement (14) begrenzte Durchgangsloch (28) umschließt und der mit der Hülle (48) verbunden ist, um das Eindringen von abfließendem Wasser durch das Durchgangsloch (28) zu verhindern.

6. Trägervorrichtung (10) für ein Solarmodul (12) nach einem der vorhergehenden Ansprüche, **dadurch gekennzeichnet, dass** die Hülle (48) elastisch verformbar ist, um sich der Form des Trägers (16) des Solarmoduls (12) anzupassen.

7. Trägervorrichtung (10) für ein Solarmodul (12) nach einem der vorhergehenden Ansprüche, **dadurch gekennzeichnet, dass** das Dachelement (14) elastisch verformbar ist, um sich insgesamt an die Form eines anderen darunterliegenden, tragenden Dachelements anzupassen.

8. Trägervorrichtung (10) für ein Solarmodul (12) nach einem der vorhergehenden Ansprüche, **dadurch gekennzeichnet, dass** sie mit einer Verankerungsvorrichtung (66) ausgestattet ist, die Folgendes enthält:
- ein Verankerungselement (68), das mit dem ersten Teil (30) des Trägers (16) verbunden ist und das unter dem Dachelement (14) angeordnet ist, und
- eine Vielzahl von Schenkeln (70, 76, 82, 88), die sich jeweils vom Verankerungselement (68) aus erstrecken und die jeweils das Dachelement (14) mit dem Träger (16) verbinden.

9. Trägervorrichtung (10) für ein Solarmodul (12) nach einem der vorhergehenden Ansprüche, **dadurch gekennzeichnet, dass** der Träger (16) eine Stütze (94) umfasst, die sich von einem Fuß (96), der zur Auflage auf dem Gebälk (17) vorgesehen ist, bis zu einem Kopf (98) erstreckt, der den zweiten Teil (40) des Trägers (16) stützt.

10. Trägervorrichtung (10) für ein Solarmodul (12) nach Anspruch 9, **dadurch gekennzeichnet, dass** die Stütze (94) mit einer Dichtungshülle (104) ausgestattet ist, die mit einem vom Dachelement (14) gebildeten Flansch (102) verbunden ist.

## Claims

1. Support device (10) for a solar panel (12) on a roof, that includes:
- a roof element (14) that delimits a passage hole (28), and
- a support (16) for solar panel (12) that passes through said passage hole (28) of the roof element (14),
wherein the support (16) includes at least one first part (30) which is adapted to be connected to a framework (17) and which extends through the passage hole (28) delimited by the roof element (14), and at least one second part (40) which forms an elbow (42) with said first part (30) and which is adapted to support the solar panel (12),
**characterised in that** the support device (10) includes an angled sheath (48) that extends around the support (16), from a first section (50) connected on the passage hole (28) delimited by the roof element (14), to a second section (52) that surrounds the second part (40) of the support (16), at least in part, to prevent rainwater ingress and to ensure the sealing of the roof element (14).

2. Support device (10) for solar panel (12) according to claim 1, **characterised in that** the second section (52) of the sheath (48) is adapted to be inclined towards the downstream end of the roof (13) according to the direction of flow of rainwater, to prevent rainwater from entering the sheath (48).

3. Support device (10) for solar panel (12) according to any one of the preceding claims, **characterised in that** the second section (52) of the sheath (48) has a free end which is sealed by a plug (54) to prevent any unwanted element from intruding into the sheath (48) and to ensure the sealing of the roof element (14).

4. Support device (10) for solar panel (12) according to claim 3, **characterised in that** the plug (54) forms an aperture (56) which has a shape complementary to the shape of the section of the support (16) that passes through the plug (54).

5. Support device (10) for solar panel (12) according to any one of the preceding claims, **characterised in that** the roof element (14) forms an annular flange (58) that borders the passage hole (28) delimited by the roof element (14), and which is connected on the sheath (48), to prevent run-off water from penetrating through said passage hole (28).

6. Support device (10) for solar panel (12) according to any one of the preceding claims, **characterised in that** the sheath (48) is elastically deformable to adapt to the shape of the support (16) of the solar panel (12).

7. Support device (10) for solar panel (12) according to any one of the preceding claims, **characterised in that** the roof element (14) is elastically deformable so as to globally fit the shape of another underlying roof element forming a support.

8. Support device (10) for solar panel (12) according to any one of the preceding claims, **characterised in that** it is equipped with an anchoring device (66) which comprises:
- an anchoring element (68) that is connected to the first part (30) of the support (16), and that is arranged under the roof element (14), and
- a plurality of branches (70, 76, 82, 88) each extending from the anchoring element (68) and each connecting the roof element (14) to the support (16).

9. Support device (10) for solar panel (12) according to any one of the preceding claims, **characterised in that** the support (16) comprises a prop (94) which extends from a foot (96) provided to bear on the framework (17), to a head (98) which supports the second part (40) of the support (16).

10. Support device (10) for solar panel (12) according to claim 9, **characterised in that** the support (94) is equipped with a sealing sheath (104) which is connected to a flange (102) formed by the roof element (14).
